# FASCICULE DE BREVET EUROPEEN

(11) **EP 0 559 588 B1**
(45) Date de publication et mention de la délivrance du brevet: **24.04.1996**
(21) Numéro de dépôt: 93420093.2
(22) Date de dépôt: 01.03.1993
(51) Int. Cl.: C22F 1/18, G21C 3/06, B21C 37/06

(54) **Procédé de fabrication de tubes à base de zirconium formés de couches de composition différente**
Verfahren zur Herstellung von Rohren auf Zirkoniumbasis bestehend aus Schichten unterschiedlicher Zusammensetzungen
Process for making zirconium base tubes formed from layers of different composition

(30) Priorité: 04.03.1992 FR 9202799
(43) Date de publication de la demande: 08.09.1993
(73) Titulaire: Compagnie Européenne du Zirconium CEZUS, F-92400 Courbevoie (FR)
(72) Inventeur: Millet, Yvon, F-49070 Beaucouze (FR); Van Wittenberghe, Jean, F-71100 Chalon/Saone (FR)
(74) Mandataire: Séraphin, Léon

(56) Documents cités:
- EP-A- 0 154 931
- EP-A- 0 326 896
- DE-A- 2 608 824
- FR-A- 2 624 136
- US-A- 4 995 548

## Description

La présente invention est relative à un procédé de fabrication de tubes à base de zirconium formés de couches de composition différente.

La recherche de l'amélioration des caractéristiques des matériaux de gainage pour l'industrie nucléaire a conduit au au développement d'un nouveau type de produits : les tubes à deux couches ou Duplex et les tubes à trois couches ou Triplex.

Les tubes Duplex sont constitués par un bloc d'âme en Zircaloy 2 ou en Zircaloy 4 dont l'épaisseur représente 80 à 95% de l'épaisseur totale du tube et qui est revêtue extérieurement par une couche ou gaine en un alliage de zirconium résistant à la corrosion en milieu réacteur nucléaire à eau bouillante ou à eau pressurisée.

Dans le cas du tube Triplex, le bloc d'âme muni de sa gaine est plaqué intérieurement de zirconium ou d'un autre alliage de zirconium destiné à former une barrière aux produits de fission dans le combustible et qui ont une action fragilisante sur l'âme en Zircaloy.

Ces deux types de tubes sont généralement désignés sous le nom de Trex composites.

### ETAT DE LA TECHNIQUE.-

Le brevet français 2624136 ayant pour correspondant le brevet U.S. 4,981,527 décrit un procédé de fabrication de tubes Triplex comportant les étapes suivantes :
"- préparation de trois ébauches tubulaires par corroyage à chaud et usinage de façon à avoir des jeux d'assemblage de 0,2 à 0,5 mm entre les ébauches;
   Les corroyages à chaud des ébauches destinées aux revêtements comportant avantageusement, après un dégrossisage, une extrusion dans le domaine alpha d'une billette percée ou bien un filage inverse dans le domaine alpha, la première méthode étant préférée pour l'ébauche en Zr non allié et la seconde pour l'ébauche de plus fort diamètre ;
-l'assemblage des trois ébauches par bombardement électronique;
-la trempe à l'eau de l'assemblage après l'avoir préchauffée dans le domaine de température bêta et de préférence entre 920 et 1050°C;
-l'extrusion de l'assemblage dans le domaine alpha;
-le laminage à froid et le traitement thermique dans le domaine alpha en intermédiaire et un recuit partiel final."

### PROBLEME POSE.

Suivant l'art antérieur cité plus haut, on voit que pour obtenir l'ébauche de plus fort diamètre qui va former la gaine, on procède à un filage inverse dans le domaine alpha d'une billette percée.

Par ailleurs, jusqu'à ce jour toutes les gammes proposées pour réaliser les tubes composites comportent la mise en oeuvre d'une gaine sans soudure de manière à être assuré qu'elle possède une structure homogène.

En effet, on sait que la réalisation d'une soudure bord à bord de deux feuilles en alliage de zirconium entraîne une variation de structure importante entre la zone de soudure qui sous l'action de la chaleur conduit à la formation d'une phase bêta, la zone affectée thermiquement par la soudure où les deux phases alpha et bêta coexistent et le reste qui demeure en phase alpha.

Or, cette structure hétérogène entraînera inévitablement des variations d'épaisseur de la gaine du tube fini et par suite des différences de comportement au cours des déformations ultérieures ainsi que des caractéristiques métallurgiques variables d'un point à l'autre du tube d'où une diminution de la résistance à la corrosion en milieu réacteur nucléaire à eau bouillante ou à eau pressurisée du tube composite ainsi réalisé.

Cependant, on conçoit que l'utilisation de feuilles roulées puisse être plus intéressante que celle de billettes creuses ne serait-ce que parce que l'obtention de ces dernières conduit à la formation d'une quantité importante de copeaux lors de leur percage d'où une perte de matières relativement chères et dont le recyclage partiel en grève fortement le prix de revient.

### EXPOSE DE L'INVENTION. -

C'est dans le but de parer aux difficultés engendrées par l'hétérogénéité de structure consécutive au soudage et de pouvoir ainsi recourir aux avantages économiques de cette technique que la demanderesse a conçu un procédé de fabrication de tubes à base de zirconium formés de couches de composition différente dans lequel on prépare une ébauche tubulaire destinée à former la couche externe du tube ou gaine et une ébauche tubulaire ou bloc d'âme de plus petit diamètre éventuellement revêtu intérieurement d'un plaçage, le dit bloc étant obtenu par usinage d'une barre à l'état de billette creuse de filage caractérisé en ce que la gaine est obtenue par roulage-soudage d'une tôle ; après enfilage sur le bloc, l'ensemble est soudé à ses extrémités puis, soumis par chauffage à un traitement de mise en solution en phase bêta, trempé à l'eau et filé.

Ainsi, à la différence de l'art antérieur où l'ébauche externe était obtenue par une opération de filage inverse, l'invention enseigne l'utilisation d'un procédé de roulage-soudage d'une tôle.

Cette tôle peut être réalisée à partir de n'importe quel alliage de zirconium habituellement utilisé dans la fabrication de gaines de tubes composites. Elle peut être obtenue par les moyens connus d'ébauchage de lingots en largets d'épaisseur voisine de 100 mm laminés à chaud jusqu'à une épaisseur finale voisine de 10 mm.

La feuille ainsi obtenue est ensuite roulée puis soudée à ses extrémités en regard par un procédé connu comme le procédé TIG ou par bombardement électronique. Après soudage, la surface intérieure du cylindre est usinée et la soudure arasée sur la génératrice extérieure.

Dans ces conditions, on améliore sensiblement la mise au mille de zirconium.

Comme dans les autres procédés de fabrication de tubes composites, la gaine est alors enfilée verticalement sur le bloc d'âme plaqué ou non puis l'ensemble est soudé à ses extrémités par un procédé de soudage de type connu tel que, par exemple, le bombardement électronique.

En outre, le procédé de roulage-soudage est combiné à un traitement de mise en solution bêta par chauffage à une température comprise entre 1020 et 1150°C suivi d'une trempe à l'eau qui permet d'uniformiser la structure en bêta et de garantir par la suite une tenue homogène à la corrosion de l'ensemble de la surface de la gaine extérieure du tube.

Le traitement en bêta est pratiqué pendant un temps court, compris entre 30 et 180 secondes et, de préférence, en utilisant un moyen de chauffage par induction pour éviter un grossissement exagéré du grain bêta et pour minimiser l'oxydation superficielle.

Dans ces conditions, on peut procéder à l'opération de filage à chaud sans qu'il soit necessaire d'éliminer la couche d'oxyde, cette opération de nettoyage étant alors reportée en fin de transformation à chaud avant de commencer la transformation à froid.

Ensuite, la gamme de fabrication est classique :
- filage à chaud à une température comprise entre 550 et 750°C selon les types d'alliages mis en oeuvre en une ébauche de diamètre déterminée ;
- traitement thermique éventuel de l'ébauche soit de détente soit de recristallisation ;
- laminage à pas de pélerin à froid ;
- recuit sous vide ou sous gaz neutre.

Ces deux dernières opérations peuvent être reprises une ou plusieurs fois jusqu'à obtention des dimensions désirées.

Le produit obtenu est ensuite conditionné et contrôlé pour répondre aux spécifications du produit ( dimensionnelles dans tous les composants, métallurgiques et de santé.)

Un contrôle soit par ultrasons soit par courants de Foucault permet de noter une épaisseur régulière des composants du tube ainsi qu'une absence de décohésion aux interfaces entre les différentes couches intérieures ou extérieures.

### EXEMPLE D'APPLICATION. -

L'invention peut être illustrée à l'aide de l'exemple d'application suivant relatif à des tubes Triplex;

### -Fabrication de l'ébauche externe :

partir d'un alliage de zirconium contenant comme éléments principaux en poids 0,5% d'étain, 0,25% de fer et 0, 10% de chrome, on a coulé un lingot qui a été ébauché en un larget d'épaisseur 100 mm puis laminé à chaud jusqu'à obtenir une tôle d'épaisseur finale de 10 mm. Cette tôle a été nettoyée par des moyens mécaniques puis décapée.

Elle a ensuite été roulée en un cylindre de diamètre extérieur 168 mm et de longueur 430 mm et soudée par bombardement électronique.

On a alors usiné la surface intérieure du cylindre jusqu'à un diamètre de 152 mm et arasé la soudure sur la génératrice extérieure du cylindre.

### -Fabrication du bloc d'âme :

Le bloc d'âme est constitué d'un bloc tubulaire en Zircaloy 2 plaqué intérieurement de zirconium déhafnié.

Le dit bloc est obtenu par forgeage d'un lingot en barres puis, usinage des dites barres pour réaliser une billette ayant pour dimensions :
- diamètre extérieur : 152 mm,
- alésage : 79 mm,
- longueur : 430 mm.

Cette billette a été plaquée intérieurement avec une gaine en zirconium déhafnié obtenue par filage d'une billette de diamètre 168 mm, alésage 48 mm, longueur 450 mm en un tube de diamètre extérieur 81 mm et intérieur 47 mm qui a été ensuite usiné en tronçons de diamètre extérieur 78,8 mm, de diamètre intérieur 48 mm et de longueur 430 mm.

Les deux composants en Zircaloy 2 et zirconium déhafnié ont été assemblés de la manière suivante :
- nettoyage des surfaces,
- décapage fluorhydrique,
- mise en place de la gaine en zirconium déhafnié sur l'âme en Zircaloy 2 verticalement par gravité,
- soudage des deux composants aux deux extrémités par soudure circulaire par bombardement électronique sous vide.<

### -Fabrication du Triplex :

la gaine extérieure et le bloc d'âme ont été assemblés de la même façon que les deux composants du bloc d'âme en laissant un jeu d'assemblage inférieur ou égal à 0,2 mm.

Puis, on a procèdé au traitement de mise en solution à 1100°C pendant 60 secondes par chauffage dans un four à induction et à une trempe à l'eau.

Ensuite, l'ensemble a été chauffé à une température de 700°C et filé en une ébauche de diamètre extérieur 80 mm et d'épaisseur 17 mm. Après traitement thermique de détente et élimination de l'oxyde superficiel, l'ébauche a été amenée par laminage à pas de pèlerin à froid à ses dimensions finales : diamètre extérieur 63,5 mm ; épaisseur : 10,9 mm et a subi un recuit sous vide à 650°C.

L'exemple ci-dessus décrit un tube Triplex destiné à des réacteurs à eau bouillante.
La même technique s'applique à des tubes Duplex.

L'invention trouve son application dans la confection de tubes composites avec une mise au mille de zirconium réduite tout en obtenant une bonne adhérence entre les composants dudit tube.

## Revendications

1. Procédé de fabrication de tubes à base de zirconium formés de couches de composition différente dans lequel on prépare une ébauche tubulaire destinée à former la couche externe du tube ou gaine et une ébauche tubulaire ou bloc d'âme de plus petit diamètre éventuellement revêtu intérieurement d'un plaçage, le dit bloc étant obtenu par usinage d'une barre à l'état de billette creuse de filage caractérisé en ce que la gaine est obtenue par roulage-soudage d'une tôle ; après enfilage sur le bloc, l'ensemble est ensuite soudé à ses extrémités puis, soumis par chauffage à un traitement de mise en solution en phase bêta, trempé à l'eau et filé.

2. Procédé selon la revendication 1, caractérisé en ce que la durée du chauffage est comprise entre 30 et 180 secondes.

3. Procédé selon la revendication 1, caractérisé en ce que le chauffage est effectué dans un four à induction.

4. Procédé selon la revendication 1, caractérisé en ce que la température de chauffage est comprise entre 1020 et 1150°C.

## Patentansprüche

1. Verfahren zur Herstellung von aus Schichten unterschiedlicher Zusammensetzung gebildeten Rohren auf Zirkoniumbasis, bei dem man einen rohrförmigen Rohling, der zur Bildung der äußeren Schicht des Rohres oder der Hülle bestimmt ist, und einen rohrförmigen Rohling oder Kernblock kleineren Durchmessers, der eventuell innerlich mit einer Plattierung beschichtet ist und durch Bearbeitung einer Stange im Zustand eines hohlen Strangpreßknüppels erhalten wird,
dadurch gekennzeichnet,
daß die Hülle durch Rollbiegen-Schweißen eines Blechs erhalten wird, das Ganze nach deren Aufschieben auf den Block an seinen Enden verschweißt, dann durch Erhitzen einer Lösungsglühbehandlung in Betaphase unterworfen, in Wasser abgeschreckt und stranggepreßt wird.

2. Verfahren nach dem Anspruch 1,
dadurch gekennzeichnet,
daß die Dauer der Erhitzung im Bereich von 30 bis 180 Sekunden ist.

3. Verfahren nach dem Anspruch 1,
dadurch gekennzeichnet,
daß die Erhitzung in einem Induktionsofen durchgeführt wird.

4. Verfahren nach dem Anspruch 1,
dadurch gekennzeichnet,
daß die Erhitzungstemperatur im Bereich von 1020 bis 1150 °C liegt.

## Claims

1. Process for producing zirconium-based tubes formed from layers of different composition in which there is prepared a tubular blank intended to form the external layer of the tube or sheath and a tubular blank or core block of smaller diameter, possibly lined internally with plating, said block being obtained by machining a rod in the state of a hollow extruded bar, characterized in that the sheath is obtained by rolling and welding a sheet; after threading on the block, the assembly is subsequently welded at its ends and then subjected, by heating, to a solution heat treatment in the beta phase, quenched in water and extruded.

2. Process according to Claim 1, characterized in that the duration of heating is between 30 and 180 seconds.

3. Process according to Claim 1, characterized in that heating is carried out in an induction furnace.

4. Process according to Claim 1, characterized in that the heating temperature is between 1,020 and 1,150° C.
